# EUROPEAN PATENT APPLICATION

(11) **EP 4 648 447 A1**
(43) Date of publication of application: **12.11.2025**
(21) Application number: 23914106.2
(22) Date of filing: 06.01.2023
(51) Int. Cl.: H04W 4/50

(54) **PERSONAL INTERNET OF THINGS NETWORK (PIN) MANAGEMENT METHODS/APPARATUS/DEVICE AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Stöckeler, Ferdinand
(86) International application number: PCT/CN2023/071121
(87) International publication number: WO 2024/145949

(57) **Abstract**

The present invention provides method for managing PINs, an apparatus, a device and a storage medium, and belongs to the technical field of communications. A method comprises: receiving a PIN parameter corresponding to a PIN, the PIN parameter comprising the valid time and/or the invalid time of the PIN; and, on the basis of the valid time and/or the invalid time of the PIN, managing the PIN. The methods in the present invention accurately manage the PINs, and may save resources and improve the management efficiency.

## Description

### FIELD

The present invention relates to the field of wireless communication technologies, and particularly to a method for managing PIN, an apparatus, a device and a storage medium.

### BACKGROUND

With the development of Internet of Things (IoT) technology, personal applications of IoT have emerged. When IoT serves individuals, individual devices may be connected to form a Personal Internet of Things Network (PIN). The PIN includes multiple terminals (e.g., wearable devices, smart terminals, vehicle-mounted terminals, etc.), where at least one terminal in the PIN is a PIN Element with Gateway Capability, (PEGC), and at least one terminal in the PIN is a PIN Element with Management Capability (PEMC). The PEMC in the PIN manages the terminals in the PIN. The PEGC in the PIN can communicate with the 5G core network (5GC), while other terminals in the PIN can communicate with the SGC through the PEGC. The PIN typically has an effective duration. Within this duration, the PIN is allowed to access the 5GC through the PEGC to use 5GC services. When the effective duration expires, the PIN is not allowed to access the 5GC.

### SUMMARY

The present invention provides a method for managing PIN, an apparatus, a device and a storage medium.

In a first aspect, an embodiment of the present invention provides a method for managing PIN, including:
receiving a PIN parameter corresponding to a PIN, where the PIN parameter includes an effective duration and/or ineffective duration of the PIN; and
managing the PIN based on the effective duration and/or ineffective duration of the PIN.

In the method for managing PIN provided by the present invention, a first network element receives the PIN parameter corresponding to the PIN, the PIN parameter includes the effective duration and/or ineffective duration of the PIN. Subsequently, the first network element manages the PIN based on the effective duration and/or ineffective duration. Thus, in the method of the present invention, the PIN is directly managed by a network element in the 5GC rather than by the PEGC in the PIN, thereby avoiding situations where "the PEGC in the PIN dishonestly manages the PIN" or "the PEGC in the PIN cannot timely communicate with the SGC for the management situation due to signal coverage problems" and achieving an accurate management of the PIN. Moreover, the method does not require introducing new entities, thereby saving resources, reducing system complexity, and improving management efficiency.

In a second aspect, an embodiment of the present invention provides a method for managing PIN, including:
receiving a first management request or a first activation request, where the first management request is used to request a second network element to release a PIN resource corresponding to the PIN or deactivate the PIN, and the first activation request is used to request activation of the PIN; and
managing the PIN based on the first management request or first activation request.

In a third aspect, an embodiment of the present invention provides a method for managing PIN, including:
receiving a second management request or a second activation request, where the second management request is used to request a first terminal and/or a second terminal to release a PIN resource corresponding to the PIN or deactivate the PIN, and the second activation request is used to request the first terminal and/or the second terminal to activate the PIN; and
managing the PIN based on the second management request or second activation request.

In a fourth aspect, an embodiment of the present invention provides a method for managing PIN, including:
receiving a first notification message or a second notification message, where the first notification message is used to notify an AF that a PIN resource corresponding to the PIN has been released or the PIN has been deactivated, and the second notification message is used to notify the AF that the PIN has been activated.

In a fifth aspect, an embodiment of the present invention provides a method for managing PIN, including:
receiving a third management request or a third activation request, where the third management request is used to request a UPF to release a PIN resource corresponding to the PIN or deactivate the PIN, and the third activation request is used to request the UPF to activate the PIN; and
managing the PIN based on the third management request or third activation request.

In a sixth aspect, an embodiment of the present invention provides a communication apparatus, including:
a transceiver module configured to receive a PIN parameter corresponding to a PIN, where the PIN parameter includes an effective duration and/or ineffective duration of the PIN; and
a processing module configured to manage the PIN based on the effective duration and/or ineffective duration of the PIN.

In a seventh aspect, an embodiment of the present invention provides a communication apparatus, including:
a transceiver module configured to receive a first management request or a first activation request, where the first management request is used to request a second network element to release a PIN resource corresponding to the PIN or deactivate the PIN, and the first activation request is used to request activation of the PIN; and
a processing module configured to manage the PIN based on the first management request or first activation request.

In an eighth aspect, an embodiment of the present invention provides a communication apparatus, including:
a transceiver module configured to receive a second management request or a second activation request, where the second management request is used to request a first terminal and/or a second terminal to release a PIN resource corresponding to the PIN or deactivate the PIN, and the second activation request is used to request the first terminal and/or the second terminal to activate the PIN; and
a processing module configured to manage the PIN based on the second management request or second activation request.

In a ninth aspect, an embodiment of the present invention provides a communication apparatus, including:
a transceiver module configured to receive a first notification message or a second notification message, where the first notification message is used to notify an AF that a PIN resource corresponding to the PIN has been released or the PIN has been deactivated, and the second notification message is used to notify the AF that the PIN has been activated.

In a tenth aspect, an embodiment of the present invention provides a communication apparatus, including:
a transceiver module configured to receive a third management request or a third activation request, where the third management request is used to request a UPF to release a PIN resource corresponding to the PIN or deactivate the PIN, and the third activation request is used to request the UPF to activate the PIN; and
a processing module configured to manage the PIN based on the third management request or third activation request.

In an eleventh aspect, an embodiment of the present invention provides a communication apparatus including a processor, where when the processor invokes a computer program in a memory, the method according to any one of the first to fifth aspects is performed.

In a twelfth aspect, an embodiment of the present invention provides a communication apparatus including a processor and a memory, where the memory stores a computer program, and the processor executes the computer program stored in the memory to cause the communication apparatus to perform the method according to any one of the first to fifth aspects.

In a thirteenth aspect, an embodiment of the present invention provides a communication apparatus including a processor and an interface circuit, where the interface circuit is configured to receive code instructions and transmit the code instructions to the processor, and the processor is configured to run the code instructions to cause the apparatus to perform the method according to any one of the first to fifth aspects.

In a fourteenth aspect, an embodiment of the present invention provides a communication system including the communication apparatus according to any one of the sixth to tenth aspects, or including the communication apparatus according to the eleventh aspect, or including the communication apparatus according to the twelfth aspect, or including the communication apparatus according to the thirteenth aspect.

In a fifteenth aspect, an embodiment of the present invention provides a computer-readable storage medium configured to store instructions for use by the network device, where when the instructions are executed, the terminal is caused to perform the method according to any one of the first to fifth aspects.

In a sixteenth aspect, the present invention further provides a computer program product including a computer program, where when the computer program is run on a computer, the computer is caused to perform the method according to any one of the first to fifth aspects.

In a seventeenth aspect, the present invention provides a chip system including at least one processor and an interface, configured to support a network device in implementing functions related to the method according to any one of the first to fifth aspects, for example, determining or processing at least one of data and information involved in the method. In a possible design, the chip system further includes a memory configured to store necessary computer programs and data for a secondary node. The chip system may be composed of chips or may include chips and other discrete devices.

In an eighteenth aspect, the present invention provides a computer program that, when run on a computer, causes the computer to perform the method according to any one of the first to fifth aspects.

In a nineteenth aspect, the present invention provides a method for managing PIN performed by a core network device, where the core network device includes a first network element, a second network element, and a UPF, and the method includes:
the first network element receiving a PIN parameter corresponding to a PIN, where the PIN parameter includes an effective duration and/or ineffective duration of the PIN;
the first network element managing the PIN based on the effective duration and/or ineffective duration of the PIN;
the first network element sending a first management request or a first activation request to the second network element, where the first management request is used to request the second network element to release a PIN resource corresponding to the PIN or deactivate the PIN, and the first activation request is used to request activation of the PIN;
the second network element receiving the first management request or the first activation request and managing the PIN based on the first management request or first activation request;
the second network element sending a third management request or a third activation request to the UPF, where the third management request is used to request the UPF to release the PIN resource corresponding to the PIN or deactivate the PIN, and the third activation request is used to request the UPF to activate the PIN; and
the UPF receiving the third management request or the third activation request and managing the PIN based on the third management request or the third activation request.

### BRIEF DESCRIPTION OF THE DRAWINGS

The above and/or additional aspects and advantages of the present invention will become apparent and readily understandable from the following description of embodiments with reference to the drawings.
FIG. 1 is a schematic architectural diagram of a communication system according to an embodiment of the present invention;
FIG. 2 is a flowchart of a method for managing PIN according to another embodiment of the present invention;
FIG. 3a is a flowchart of a method for managing PIN according to yet another embodiment of the present invention;
FIG. 3b is a flowchart of a method for managing PIN according to yet another embodiment of the present invention;
FIG. 4a is a flowchart of a method for managing PIN according to still another embodiment of the present invention;
FIG. 4b is a flowchart of a method for managing PIN according to still another embodiment of the present invention;
FIG. 5 is a flowchart of a method for managing PIN according to another embodiment of the present invention;
FIG. 6 is a flowchart of a method for managing PIN according to yet another embodiment of the present invention;
FIG. 7 is a flowchart of a method for managing PIN according to still another embodiment of the present invention;
FIG. 8 is a flowchart of a method for managing PIN according to an embodiment of the present invention;
FIG. 9a is a flowchart of a method for managing PIN according to an embodiment of the present invention;
FIG. 9b is a flowchart of a method for managing PIN according to an embodiment of the present invention;
FIG. 10 is a flowchart of a method for managing PIN according to an embodiment of the present invention;
FIG. 11 is a flowchart of a method for managing PIN according to an embodiment of the present invention;
FIG. 12 is a flowchart of a method for managing PIN according to an embodiment of the present invention;
FIG. 13 is a flowchart of a method for managing PIN according to an embodiment of the present invention;
FIG. 14 is a flowchart of a method for managing PIN according to an embodiment of the present invention;
FIG. 15 is a flowchart of a method for managing PIN according to an embodiment of the present invention;
FIG. 16a is a flowchart of a method for managing PIN according to an embodiment of the present invention;
FIG. 16b is a flowchart of a method for managing PIN according to an embodiment of the present invention;
FIG. 17 is a structural schematic diagram of a communication apparatus according to an embodiment of the present invention;
FIG. 18 is a structural schematic diagram of a communication apparatus according to another embodiment of the present invention;
FIG. 19 is a structural schematic diagram of a communication apparatus according to an embodiment of the present invention;
FIG. 20 is a structural schematic diagram of a communication apparatus according to an embodiment of the present invention;
FIG. 21 is a structural schematic diagram of a communication apparatus according to an embodiment of the present invention;
FIG. 22 is a block diagram of a user equipment according to an embodiment of the present invention; and
FIG. 23 is a block diagram of a network-side device according to an embodiment of the present invention.

### DETAILED DESCRIPTION

Hereinafter, exemplary embodiments will be described in detail with reference to the drawings. In the drawings, like reference numerals represent like or similar elements. The implementations described in the following exemplary embodiments do not represent all implementations consistent with the embodiments of the present invention. Rather, they are merely examples of apparatuses and methods consistent with some aspects of the present invention as detailed in the appended claims.

The terms used in the embodiments of the present invention are for the purpose of describing particular embodiments only and are not intended to limit the embodiments of the present invention. The singular forms "a", and "the" used in the embodiments of the present invention and the appended claims are also intended to include plural forms unless the context clearly indicates otherwise. It should also be understood that the term "and/or" as used herein refers to and includes any and all possible combinations of one or more of the associated listed items.

It should be understood that although the terms first, second, third, etc. may be used in the embodiments of the present invention to describe various information, such information should not be limited to these terms. These terms are only used to distinguish information of the same type from one another. For example, without departing from the scope of the embodiments of the present invention, first information may also be referred to as second information, and similarly, second information may also be referred to as first information. Depending on the context, the word "if" or "when" as used herein may be interpreted as "at the time of" or "upon" or "in response to determining".

The embodiments of the present invention are described in detail below with reference to the drawings, where like or similar reference numerals refer to like or similar elements throughout. The embodiments described below with reference to the drawings are exemplary and are intended to explain the present invention, but should not be construed as limiting the present invention.

For ease of understanding, the terms involved in the present invention are first introduced.

### 1. Personal Internet of Things Network (PIN):

The use of IoT devices in homes and for close-proximity communication between people creates PINs. A PIN network is defined as "a group of interconnected devices primarily concentrated in and around homes and individuals", where the PIN network communicates with external networks through a local gateway. For example, a user sitting in a car connecting to the vehicle via a smartphone or any other IoT device creates a PIN.

### 2. Access and Mobility Management Function (AMF) Network Element:

AMF network element supports terminals with different mobility management requirements, where the main tasks include: terminal of non-access stratum (NAS) signaling; NAS signaling security; access stratum security control; core network inter-node signaling for mobility between 3rd Generation Partnership Project (3GPP) access networks; reachability of idle mode terminals (including control and execution of paging retransmission); registration area management; support for intra-system and inter-system mobility; access authentication; access authorization, including roaming rights checking; Mobility management control (subscription and policies); support for network slicing; session management function (SMF) selection.

### 3. Unified Data Management (UDM):

UDM carries functions related to data management, such as Authentication Credential Repository and Processing Function (ARPF). It can select authentication methods based on user identity and configured policies, and compute authentication data and keys for the Authentication Server Function (AUSF) when needed.

### 4. Application Function (AF):

AF is an application function that can interact with the 5G network through the Network Exposure Function (NEF) interface to exchange information such as service transmission requirements and policies, thereby influencing the transmission of related services.

Optionally, in communication systems, PINs are typically managed based on their effective durations using the following methods:
Method 1: the PEMC in the PIN obtains the effective duration of the PIN. When the effective duration expires, the PEMC sends an indication signal to the PIN Controller (CTL) entity to instruct the release or deactivation of the PIN.
Method 2: the PIN CTL entity obtains the effective duration of the PIN. When the effective duration expires, the PIN CTL entity sends an indication signal to various network elements in the 5G Core (5GC) to instruct the release or deactivation of the PIN.

However, in the related art Method 1, the PEMC in the PIN may not honestly send the indication signal when the effective duration expires. For example, it may occur that: the PEMC sends the indication signal when the effective duration does not expire, or the PEMC does not send the indication signal when the effective duration expires, or the PEMC cannot send the indication signal due to lack of signal coverage when the effective duration expires. These scenarios may affect the management of the PIN. Additionally, both Method 1 and Method 2 in the related art require the introduction of a new entity (the PIN CTL entity) to manage the PIN. However, introducing a new entity increases system complexity, overhead, and costs.

In view of this, the present invention provides a method for managing PIN.

To better understand the method for managing PIN disclosed in the embodiments of the present invention, the communication system to which the embodiments of the present invention are applicable is first described below.

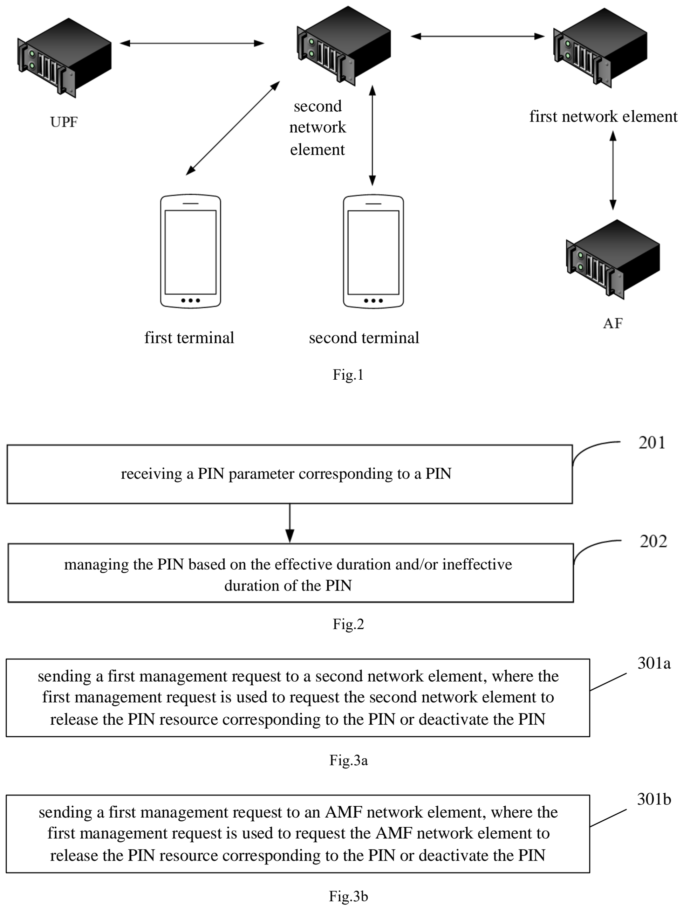

Please refer to FIG. 1, which is a schematic architectural diagram of a communication system according to an embodiment of the present invention. The communication system may include, but is not limited to, a first network element, a second network element, an AF, a first terminal and/or a second terminal, and a User Plane Function (UPF). Optionally, the number and form of devices shown in FIG. 1 are for illustration only and do not limit the embodiments of the present invention. In practical applications, there may be one or more first network elements, one or more second network elements, one or more AFs, one or more first terminals, one or more second terminals, or one or more UPFs. For example, the communication system shown in FIG. 1 includes one first network element, one second network element, one AF, one first terminal, one second terminal, and one UPF.

It should be noted that the technical solutions of the embodiments of the present invention can be applied to various communication systems, such as: Long-Term Evolution (LTE) systems; Fifth-generation (5G) mobile communication systems; 5G New Radio (NR) systems; other future new mobile communication systems, etc.

The first terminal or the second terminal in the embodiments of the present invention may be an entity on the user side for receiving or transmitting signals, such as a mobile phone. The first terminal or the second terminal may also be referred to as a terminal, user equipment (UE), mobile station (MS), mobile terminal (MT), etc. The first terminal or the second terminal may be a car with communication capabilities, a smart car, a mobile phone, a wearable device, a tablet (Pad), a computer with wireless transceiver capabilities, a virtual reality (VR) terminal, an augmented reality (AR) terminal, a wireless terminal in industrial control, a wireless terminal in self-driving, a wireless terminal in remote medical surgery, a wireless terminal in smart grids, a wireless terminal in transportation safety, a wireless terminal in smart cities, a wireless terminal in smart homes, etc. The embodiments of the present invention do not limit the specific technology or device form adopted by the UE.

It is understandable that the communication system described in the embodiments of the present invention is to more clearly illustrate the technical solutions of the embodiments of the present invention and does not constitute a limitation on the technical solutions provided by the embodiments of the present invention. Those skilled in the art will appreciate that the technical solutions provided by the embodiments of the present invention are equally applicable to similar technical problems as system architectures evolve and new service scenarios emerge.

The method for managing PINs, the apparatus, the device and the storage media provided by the embodiments of the present invention are described below in detail with reference to the drawings.

It should be noted that in the present invention, any embodiment of the method for managing PIN can be executed independently. Any implementation in the embodiments can also be executed independently or in combination with other embodiments or possible implementation methods in other embodiments, or in combination with any technical solution in the related art.

FIG. 2 is a flowchart of a method for managing PIN according to an embodiment of the present invention. The method is performed by a first network element. As shown in FIG. 2, the method for managing PIN may include the following steps:

Step 201: receiving a PIN parameter corresponding to a PIN.

For the concept of PIN reference may be made to the term explanation part of the foregoing description.

Optionally, in an embodiment of the present invention, the first network element may include at least one of the following:
UDM;
NEF;
Policy Control Function (PCF); or
Unified Data Repository (UDR).

Optionally, in an embodiment of the present invention, the PIN parameter may include an effective duration and/or an ineffective duration of the PIN. The effective duration may be, for example, the duration supported by the payment of the PIN for the PIN to access to the 5GC. Optionally, the PIN may request access to the 5GC to use the services of the SGC by payment to the operator. The duration supported by the payment of the PIN for the PIN to access to the 5GC may be the effective duration of the PIN. When the effective duration expires, the PIN is no longer allowed to use the services of the 5GC. When the PIN renews the payment, the PIN is allowed to use the services of the 5GC again.

In an embodiment of the present invention, the effective duration may be an effective time period, which indicates that the PIN can access the SGC during the effective time period. For example, the valid time period may be from 15:00 to 23:00 UTC. Alternatively, in an embodiment of the present invention, the effective duration may be an effective time limit, which indicates that the PIN can access the 5GC within the effective time limit from a certain time point (such as the time point when the PIN starts to access the 5GC). When the effective time limit expires, it is considered that the effective duration of the PIN expires. For example, the effective time limit may be 30 minutes or 1 hour.

In an embodiment of the present invention, the ineffective duration may be an ineffective time period, which indicates that the PIN cannot access the SGC during the ineffective time period. For example, the ineffective time period may be from 15:00 to 23:00 UTC. Alternatively, in an embodiment of the present invention, the ineffective duration may be an ineffective time limit, which indicates that the PIN cannot access the 5GC within the ineffective time limit from a certain time point (such as the time point when the PIN stops accessing the 5GC). For example, the ineffective time limit may be 30 minutes or 1 hour.

Optionally, in an embodiment of the present invention, the PIN parameter may further include a PIN identifier (ID).

Optionally, the PIN parameter may be sent by the AF to the first network element. The PIN parameter may be sent by the AF to the first network element when the PIN registers with the AF, or may be sent by the AF to the first network element when the PIN parameter of the PIN is updated.

Step 202: managing the PIN based on the effective duration and/or ineffective duration of the PIN.

Optionally, in an embodiment of the present invention, the "managing the PIN based on the effective duration and/or ineffective duration of the PIN" may include: if the current time is not within the effective duration of the PIN, and/or if the current time is within the ineffective duration of the PIN, releasing the PIN resource corresponding to the PIN. Releasing the PIN resource corresponding to the PIN may include: releasing the context information of the PIN stored locally. By releasing the context information of the PIN, the first network element no longer responds to the service corresponding to the PIN, so that the PIN cannot communicate with the first network element, and thus cannot use the services in the 5GC. In an embodiment of the present invention, the foregoing "releasing" is only an illustrative description of the present invention. It should be understood that "releasing" has the same meaning as "not saving", "deleting", "removing", "deregistering", etc. Other words synonymous with "releasing" are all within the scope of the present invention.

Optionally, in another embodiment of the present invention, the "managing the PIN based on the effective duration and/or ineffective duration of the PIN" may include: if the current time is not within the effective duration of the PIN, and/or if the current time is within the ineffective duration of the PIN, deactivating the PIN; if the current time is within the effective duration of the PIN, activating the PIN. Deactivating the PIN may include: not processing the service corresponding to the PIN, that is, not responding to the service corresponding to the PIN, so that the PIN can no longer use the services of the 5GC by deactivating the PIN. The difference between "deactivating the PIN" and the foregoing "PIN resource corresponding to the PIN" is that when the PIN is deactivated, only the service corresponding to the PIN is not processed (or no longer responded to), but the PIN resource corresponding to the PIN is not released. Optionally, the foregoing activating the PIN may include: processing (or responding to) the service corresponding to the PIN, where the PIN can use the services of the 5GC by activating the PIN.

In summary, in the method for managing PIN provided by the embodiments of the present invention, the first network element receives the PIN parameter corresponding to the PIN, where the PIN parameter includes the effective duration and/or ineffective duration of the PIN; then, the first network element manages the PIN based on the effective duration and/or ineffective duration of the PIN. It can be seen that in the method of the present invention, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

FIG. 3a is a flowchart of a method for managing PIN according to an embodiment of the present invention. The method is performed by a first network element. As shown in FIG. 3a, the method for managing PIN may include the following steps:
Step 301a: sending a first management request to a second network element, where the first management request is used to request the second network element to release the PIN resource corresponding to the PIN or deactivate the PIN.

Optionally, the first management request may be sent to the second network element when the first network element determines to release the PIN resource corresponding to the PIN or deactivate the PIN. The first management request may further include the PIN ID of the PIN, so as to inform the second network element which PIN resource is to be released or which PIN is to be deactivated.

Optionally, in an embodiment of the present invention, the second network element may include at least one of the following:
AMF network element; or
Session Management Function (SMF) network element.

Optionally, in an embodiment of the present invention, when the first network element is an AMF network element, the first management request may include an identifier of a first terminal and/or an identifier of a second terminal, where the first terminal may be: the PEGC in the PIN, and the second terminal may be: the PEMC in the PIN. Optionally, by sending the identifier of the first terminal and/or the identifier of the second terminal to the AMF network element, the AMF network element can subsequently send an instruction to the first terminal and/or the second terminal based on the identifier of the first terminal and/or the identifier of the second terminal, to instruct the first terminal and/or the second terminal to release the PIN resource corresponding to the PIN or deactivate the PIN.

In summary, in the method for managing PIN provided by the embodiments of the present invention, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity and improving management efficiency.

FIG. 3b is a flowchart of a method for managing PIN according to an embodiment of the present invention. The method is performed by a first network element. As shown in FIG. 3b, the method for managing PIN may include the following steps:

Step 301b: sending a first management request to an AMF network element, where the first management request is used to request the AMF network element to release the PIN resource corresponding to the PIN or deactivate the PIN.

Optionally, the first management request may be sent to the AMF network element when the first network element determines to release the PIN resource corresponding to the PIN or deactivate the PIN. The first management request may further include the PIN ID of the PIN, so as to inform the AMF which PIN resource is to be released or which PIN is to be deactivated.

Optionally, in an embodiment of the present invention, the first management request may include an identifier of a first terminal and/or an identifier of a second terminal, where the first terminal may be: the PEGC in the PIN, and the second terminal may be: the PEMC in the PIN. Optionally, by sending the identifier of the first terminal and/or the identifier of the second terminal to the AMF network element, the AMF network element can subsequently send an instruction to the first terminal and/or the second terminal based on the identifier of the first terminal and/or the identifier of the second terminal, to instruct the first terminal and/or the second terminal to release the PIN resource corresponding to the PIN or deactivate the PIN.

In summary, in the method for managing PIN provided by the embodiments of the present invention, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity and improving management efficiency.

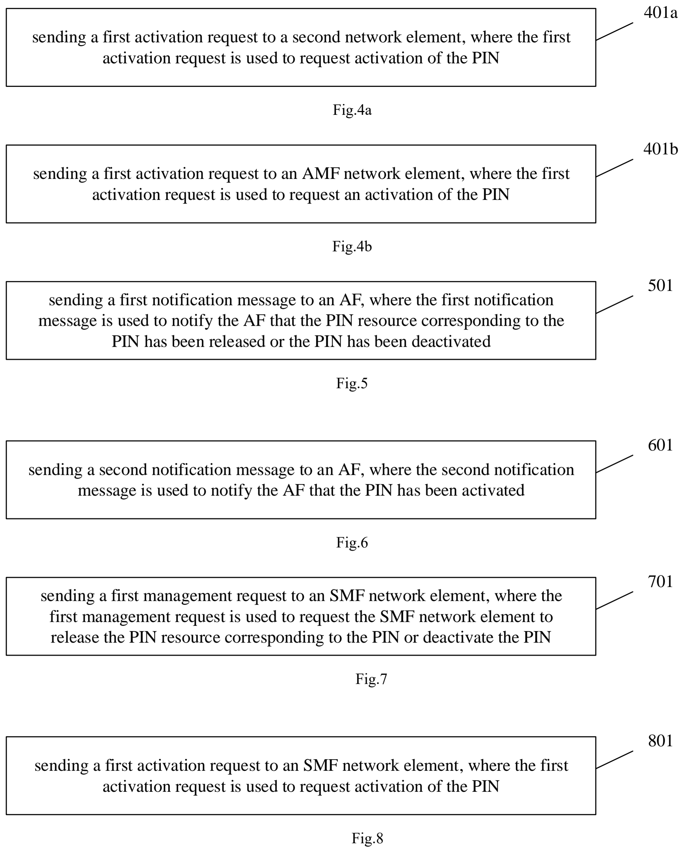

FIG. 4a is a flowchart of a method for managing PIN according to an embodiment of the present invention. The method is performed by a first network element. As shown in FIG. 4a, the method for managing PIN may include the following steps:
Step 401a: sending a first activation request to a second network element, where the first activation request is used to request activation of the PIN.

Optionally, the first activation request may be sent to the second network element when the first network element determines to activate the PIN. The first activation request may further include the PIN ID of the PIN, so as to inform the second network element which PIN is to be activated.

Optionally, in an embodiment of the present invention, the second network element may include at least one of the following:
AMF network element;
SMF network element.

Optionally, in an embodiment of the present invention, when the first network element is an AMF network element, the first activation request may include an identifier of a first terminal and/or an identifier of a second terminal, where the first terminal may be: the PEGC in the PIN, and the second terminal may be: the PEMC in the PIN. Optionally, by sending the identifier of the first terminal and/or the identifier of the second terminal to the AMF network element, the AMF network element can subsequently send an instruction to the first terminal and/or the second terminal based on the identifier of the first terminal and/or the identifier of the second terminal, to instruct the first terminal and/or the second terminal to activate the PIN.

In summary, in the method for managing PIN provided by the embodiments of the present invention, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity and improving management efficiency.

FIG. 4b is a flowchart of a method for managing PIN according to an embodiment of the present invention. The method is performed by a first network element. As shown in FIG. 4b, the method for managing PIN may include the following steps:
Step 401b: sending a first activation request to an AMF network element, where the first activation request is used to request an activation of the PIN.

Optionally, the first activation request may be sent to the AMF network element when the first network element determines to activate the PIN. The first activation request may further include the PIN ID of the PIN, so as to inform the AMF which PIN is to be activated.

Optionally, in an embodiment of the present invention, the first activation request may include an identifier of a first terminal and/or an identifier of a second terminal, where the first terminal may be: the PEGC in the PIN, and the second terminal may be: the PEMC in the PIN. Optionally, by sending the identifier of the first terminal and/or the identifier of the second terminal to the AMF network element, the AMF network element can subsequently send an instruction to the first terminal and/or the second terminal based on the identifier of the first terminal and/or the identifier of the second terminal, to instruct the first terminal and/or the second terminal to activate the PIN.

In summary, in the method for managing PIN provided by the embodiments of the present invention, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity and improving management efficiency.

FIG. 5 is a flowchart of a method for managing PIN according to an embodiment of the present invention. The method is performed by a first network element. As shown in FIG. 5, the method for managing PIN may include the following steps:
Step 501: sending a first notification message to an AF, where the first notification message is used to notify the AF that the PIN resource corresponding to the PIN has been released or the PIN has been deactivated.

Optionally, the first notification message may be sent to the AF when the first network element has released the PIN resource corresponding to the PIN or deactivated the PIN, to notify the AF that the PIN resource corresponding to the PIN has been released or the PIN has been deactivated, so that the AF can perform corresponding operations on the PIN subsequently, such as releasing the PIN resource corresponding to the PIN, or deactivating the PIN, or renewing the payment to continue activating or creating a new PIN, etc.

Optionally, the first notification message may further include the PIN ID of the PIN, so as to inform the AF which PIN resource has been released or which PIN has been deactivated.

In summary, in the method for managing PIN provided by the embodiments of the present invention, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity and improving management efficiency.

FIG. 6 is a flowchart of a method for managing PIN according to an embodiment of the present invention. The method is performed by a first network element. As shown in FIG. 6, the method for managing PIN may include the following steps:
Step 601: sending a second notification message to an AF, where the second notification message is used to notify the AF that the PIN has been activated.

Optionally, the second notification message may be sent to the AF when the first network element has activated the PIN, to notify the AF that the PIN resource corresponding to the PIN has been activated, so that the AF can perform corresponding operations on the PIN subsequently, such as activating the PIN, etc.

Optionally, the second notification message may further include the PIN ID of the PIN, so as to inform the AF which PIN has been activated.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

FIG. 7 is a flowchart of a method for managing PIN according to an embodiment of the present invention. The method is performed by a first network element. As shown in FIG. 7, the method for managing PIN may include the following steps:
Step 701: sending a first management request to an SMF network element, where the first management request is used to request the SMF network element to release the PIN resource corresponding to the PIN or deactivate the PIN.

Optionally, the first management request may be sent to the SMF network element when the first network element determines to release the PIN resource corresponding to the PIN or deactivate the PIN. The first management request may further include the PIN ID of the PIN, so as to inform the SMF which PIN resource is to be released or which PIN is to be deactivated.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

FIG. 8 is a flowchart of a method for managing PIN according to an embodiment of the present invention. The method is performed by a first network element. As shown in FIG. 8, the method for managing PIN may include the following steps:
Step 801: sending a first activation request to an SMF network element, where the first activation request is used to request activation of the PIN.

Optionally, the first activation request may be sent to the SMF network element when the first network element determines to activate the PIN. The first activation request may further include the PIN ID of the PIN, so as to inform the SMF which PIN is to be activated.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

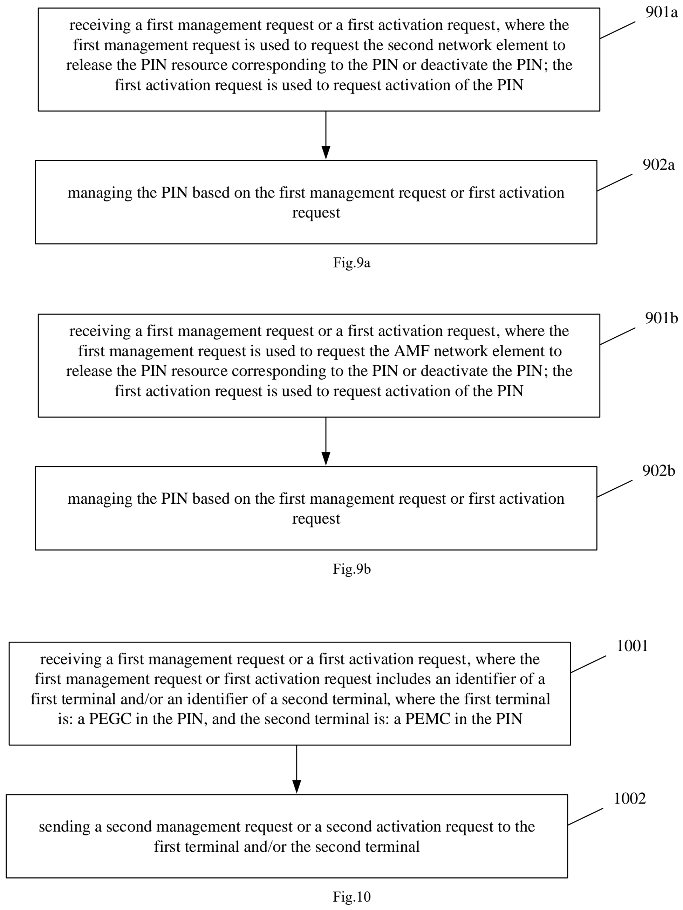

FIG. 9a is a flowchart of a method for managing PIN according to an embodiment of the present invention. The method is performed by a second network element. As shown in FIG. 9a, the method for managing PIN may include the following steps:

Step 901a: receiving a first management request or a first activation request, where the first management request is used to request the second network element to release the PIN resource corresponding to the PIN or deactivate the PIN; the first activation request is used to request activation of the PIN.

For descriptions of the first management request or first activation request, reference may be made to the foregoing embodiments.

Step 902a: managing the PIN based on the first management request or first activation request.

Optionally, in an embodiment of the present invention, managing the PIN based on the first management request may include at least one of:
releasing the PIN resource corresponding to the PIN; or
deactivating the PIN.

Optionally, the second network element may include at least one of:
AMF network element; or
SMF network element.

For the AMF network element, the method for releasing the PIN resource corresponding to the PIN may include at least one of:
releasing context information of the PIN;
terminating a first policy associated with the PIN, where the first policy is a mobility management policy for the PIN.

For the SMF network element, the method for releasing the PIN resource corresponding to the PIN may include at least one of:
releasing context information of the PIN;
terminating a second policy associated with the PIN, where the second policy may be a session policy associated with the PIN, e.g., terminating a Protocol Data Unit (PDU) session associated with the PIN.

Optionally, managing the PIN based on the first activation request may include:
activating the PIN.

For descriptions of "deactivating the PIN" and "activating the PIN", reference may be made to the foregoing embodiments.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

FIG. 9b is a flowchart of a method for managing PIN according to an embodiment of the present invention. The method is performed by an AMF network element. As shown in FIG. 9b, the method for managing PIN may include the following steps:
Step 901b: receiving a first management request or a first activation request, where the first management request is used to request the AMF network element to release the PIN resource corresponding to the PIN or deactivate the PIN; the first activation request is used to request activation of the PIN.

For descriptions of the first management request or first activation request, reference may be made to the foregoing embodiments.

Step 902b: managing the PIN based on the first management request or first activation request.

Optionally, in an embodiment of the present invention, managing the PIN based on the first management request may include at least one of:
releasing the PIN resource corresponding to the PIN; or
deactivating the PIN.

Optionally, for the AMF network element, the method for releasing the PIN resource corresponding to the PIN may include at least one of:
releasing context information of the PIN; or
terminating a first policy associated with the PIN, where the first policy is a mobility management policy for the PIN.

Optionally, managing the PIN based on the first activation request may include:
activating the PIN.

For descriptions of "deactivating the PIN" and "activating the PIN", reference may be made to the foregoing embodiments.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

FIG. 10 is a flowchart of a method for managing PIN according to an embodiment of the present invention. The method is performed by an AMF network element. As shown in FIG. 10, the method for managing PIN may include the following steps:
Step 1001: receiving a first management request or a first activation request, where the first management request or first activation request includes an identifier of a first terminal and/or an identifier of a second terminal, where the first terminal is: a PEGC in the PIN, and the second terminal is: a PEMC in the PIN.

For descriptions of step 1001, reference may be made to the foregoing embodiments.

Step 1002: sending a second management request or a second activation request to the first terminal and/or the second terminal.

Optionally, in an embodiment of the present invention, the second management request is used to request the first terminal and/or the second terminal to release the PIN resource corresponding to the PIN or deactivate the PIN; the second activation request is used to request the first terminal and/or the second terminal to activate the PIN.

Optionally, the AMF network element may further receive a response message sent by the first terminal and/or the second terminal. Optionally, the response message may be used to indicate that the first terminal and/or the second terminal has received the instruction to release or deactivate the PIN.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

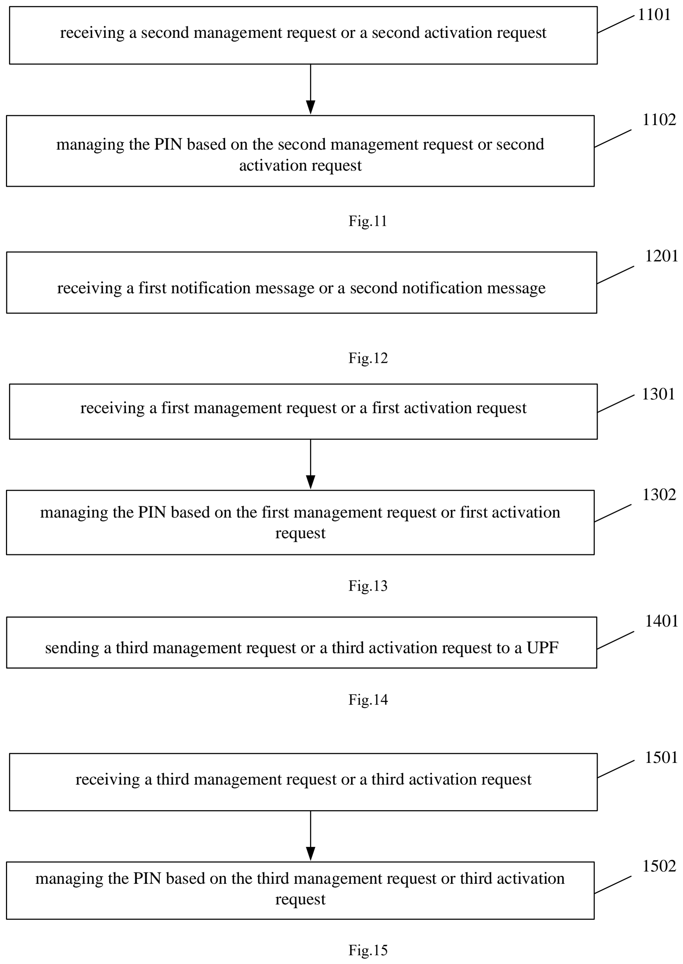

FIG. 11 is a flowchart of a method for managing PIN according to an embodiment of the present invention. The method is performed by a first terminal and/or a second terminal. As shown in FIG. 11, the method for managing PIN may include the following steps:
Step 1101: receiving a second management request or a second activation request, where the second management request is used to request the first terminal and/or the second terminal to release the PIN resource corresponding to the PIN or deactivate the PIN; the second activation request is used to request the first terminal and/or the second terminal to activate the PIN.

Step 1102: managing the PIN based on the second management request or second activation request.

Optionally, in an embodiment of the present invention, managing the PIN based on the second management request may include at least one of:
releasing the PIN resource corresponding to the PIN;
deactivating the PIN.

Optionally, for the first terminal and/or the second terminal, the method for releasing the PIN resource corresponding to the PIN may include: releasing context information of the PIN, thereby causing the first terminal to no longer act as the PEGC in the PIN, and/or causing the second terminal to no longer act as the PEMC in the PIN.

Optionally, managing the PIN based on the first activation request may include:
activating the PIN.

For descriptions of "deactivating the PIN" and "activating the PIN", reference may be made to the foregoing embodiments.

Optionally, in an embodiment of the present invention, the first terminal and/or the second terminal may further send a response message to the AMF network element. Optionally, the response message may be used to indicate that the first terminal and/or the second terminal has received the instruction to release or deactivate the PIN.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

FIG. 12 is a flowchart of a method for managing PIN according to an embodiment of the present invention. The method is performed by an AF. As shown in FIG. 12, the method for managing PIN may include the following steps:
Step 1201: receiving a first notification message or a second notification message, where the first notification message is used to notify the AF that the PIN resource corresponding to the PIN has been released or the PIN has been deactivated; the second notification message is used to notify the AF that the PIN has been activated.

For descriptions of step 1201, reference may be made to the foregoing embodiments.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

FIG. 13 is a flowchart of a method for managing PIN according to an embodiment of the present invention. The method is performed by an SMF. As shown in FIG. 13, the method for managing PIN may include the following steps:
Step 1301: receiving a first management request or a first activation request, where the first management request is used to request the SMF to release the PIN resource corresponding to the PIN or deactivate the PIN; the first activation request is used to request activation of the PIN.

For descriptions of step 1301, reference may be made to the foregoing embodiments.

Step 1302: managing the PIN based on the first management request or first activation request.

Optionally, in an embodiment of the present invention, managing the PIN based on the first management request may include at least one of:
releasing the PIN resource corresponding to the PIN;
deactivating the PIN.

Optionally, for the SMF network element, the method for releasing the PIN resource corresponding to the PIN may include at least one of:
releasing context information of the PIN;
terminating a second policy associated with the PIN, where the second policy may be a session policy associated with the PIN. For example, terminating a PDU session associated with the PIN.

Optionally, managing the PIN based on the first activation request may include:
activating the PIN.

For descriptions of "deactivating the PIN" and "activating the PIN", reference may be made to the foregoing embodiments.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

FIG. 14 is a flowchart of a method for managing PIN according to an embodiment of the present invention. The method is performed by an SMF. As shown in FIG. 14, the method for managing PIN may include the following steps:
Step 1401: sending a third management request or a third activation request to a UPF, where the third management request is used to request the UPF to release the PIN resource corresponding to the PIN or deactivate the PIN; the third activation request is used to request the UPF to activate the PIN.

Optionally, the third management request may be sent to the SMF after the SMF network element receives the first management request, and the third activation request may be sent to the SMF after the SMF network element receives the first activation request.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

FIG. 15 is a flowchart of a method for managing PIN according to an embodiment of the present invention. The method is performed by a UPF. As shown in FIG. 15, the method for managing PIN may include the following steps:
Step 1501: receiving a third management request or a third activation request, where the third management request is used to request the UPF to release the PIN resource corresponding to the PIN or deactivate the PIN; the third activation request is used to request the UPF to activate the PIN.

Step 1502: managing the PIN based on the third management request or third activation request.

Optionally, managing the PIN based on the third management request may include at least one of:
releasing the PIN resource corresponding to the PIN;
deactivating the PIN.

Optionally, for the UPF network element, the method for releasing the PIN resource corresponding to the PIN may include: releasing context information of the PIN.

Optionally, managing the PIN based on the first activation request may include:
activating the PIN.

For descriptions of "deactivating the PIN" and "activating the PIN", reference may be made to the foregoing embodiments.

In summary, in the PIN management method provided by the disclosed embodiments, the PIN is directly managed by the network element in the 5GC, rather than by the PEGC in the PIN, thereby avoiding the phenomenon that "the PEGC in the PIN does not honestly manage the PIN, or the PEGC in the PIN cannot communicate with the 5GC for the communication management situation in time due to signal coverage problems", and realizing accurate management of the PIN. Moreover, the method of the present invention does not need to introduce a new entity, thereby saving resources, reducing system complexity, and improving management efficiency.

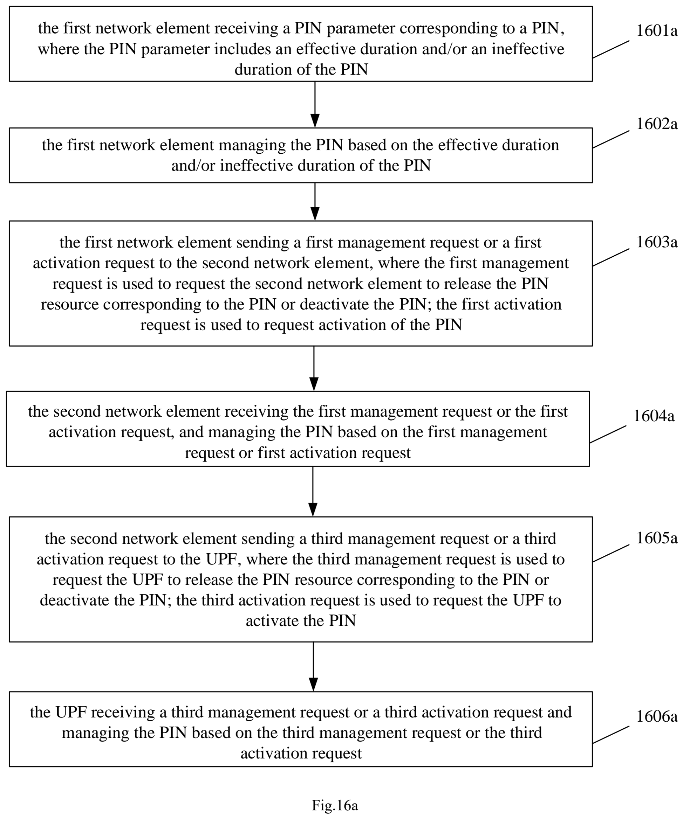

FIG. 16a is a flowchart of a method for managing PIN according to an embodiment of the present invention. The method is performed by a core network device, where the core network device includes a first network element, a second network element, and a UPF. As shown in FIG. 16a, the method for managing PIN may include the following steps:
Step 1601a: the first network element receiving a PIN parameter corresponding to a PIN, where the PIN parameter includes an effective duration and/or an ineffective duration of the PIN.

Step 1602a: the first network element managing the PIN based on the effective duration and/or ineffective duration of the PIN.

Step 1603a: the first network element sending a first management request or a first activation request to the second network element, where the first management request is used to request the second network element to release the PIN resource corresponding to the PIN or deactivate the PIN; the first activation request is used to request activation of the PIN.

Step 1604a: the second network element receiving the first management request or the first activation request, and managing the PIN based on the first management request or first activation request.

Step 1605a: the second network element sending a third management request or a third activation request to the UPF, where the third management request is used to request the UPF to release the PIN resource corresponding to the PIN or deactivate the PIN; the third activation request is used to request the UPF to activate the PIN.

Step 1606a: a UPF receiving a third management request or a third activation request and managing the PIN based on the third management request or the third activation request.

For detailed descriptions of steps 1601a-1606a reference may be made refer to the foregoing embodiments.

In summary, in the method for managing PIN provided in the embodiments of the present invention, the network element in the 5GC directly manages the PIN, rather than the PEGC in the PIN managing the PIN, thereby avoiding the phenomenon where "the PEGC in the PIN dishonestly manages the PIN, or the PEGC in the PIN cannot communicate with the 5GC in time to manage the situation due to signal coverage issues," achieving accurate management of the PIN. Moreover, the method of the present invention does not require the introduction of new entities, thereby saving resources, reducing system complexity, and improving management efficiency.

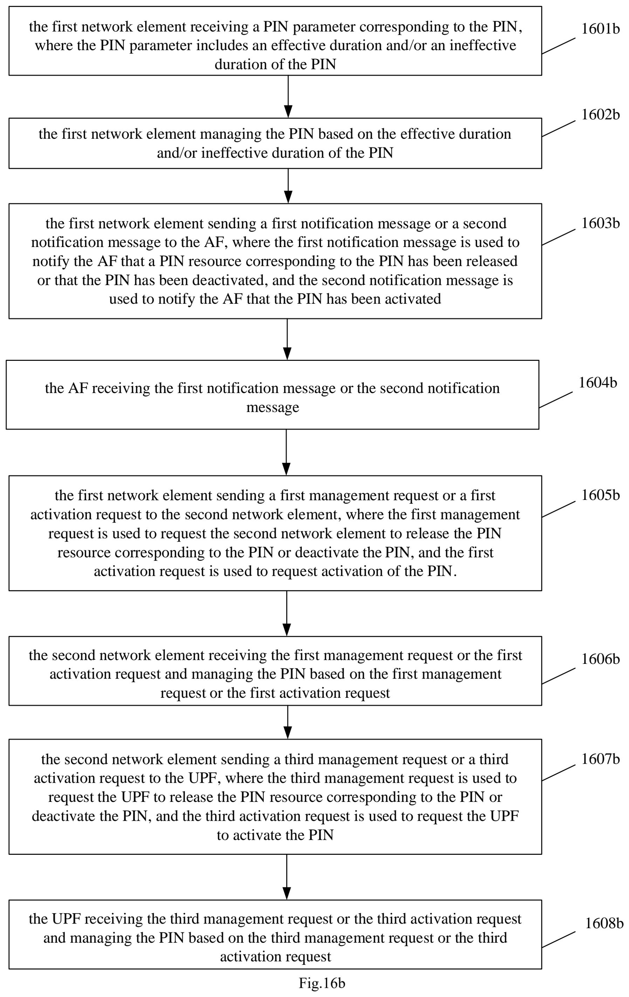

FIG. 16b is a schematic flowchart of a method for managing PIN provided by an embodiment of the present invention. The method is performed by a core network device, where the core network device includes a first network element, a second network element, a UPF, and an AF. As shown in FIG. 16b, the method for managing PIN may include the following steps:

Step 1601b: the first network element receiving a PIN parameter corresponding to the PIN, where the PIN parameter includes an effective duration and/or an ineffective duration of the PIN.

Step 1602b: the first network element managing the PIN based on the effective duration and/or ineffective duration of the PIN.

Step 1603b: the first network element sending a first notification message or a second notification message to the AF, where the first notification message is used to notify the AF that a PIN resource corresponding to the PIN has been released or that the PIN has been deactivated, and the second notification message is used to notify the AF that the PIN has been activated.

Step 1604b: the AF receiving the first notification message or the second notification message.

Step 1605b: the first network element sending a first management request or a first activation request to the second network element, where the first management request is used to request the second network element to release the PIN resource corresponding to the PIN or deactivate the PIN, and the first activation request is used to request activation of the PIN.

Step 1606b: the second network element receiving the first management request or the first activation request and managing the PIN based on the first management request or the first activation request.

Step 1607b: the second network element sending a third management request or a third activation request to the UPF, where the third management request is used to request the UPF to release the PIN resource corresponding to the PIN or deactivate the PIN, and the third activation request is used to request the UPF to activate the PIN.

Step 1608b: the UPF receiving the third management request or the third activation request and manages the PIN based on the third management request or the third activation request.

For detailed descriptions of steps 1601a-1608a reference may be made to the foregoing embodiments.

In summary, in the method for managing PIN provided in the embodiments of the present invention, the network element in the 5GC directly manages the PIN, rather than the PEGC in the PIN managing the PIN, thereby avoiding the phenomenon where "the PEGC in the PIN dishonestly manages the PIN, or the PEGC in the PIN cannot communicate with the 5GC in time to manage the situation due to signal coverage issues," achieving accurate management of the PIN. Moreover, the method of the present invention does not require the introduction of new entities, thereby saving resources, reducing system complexity, and improving management efficiency.

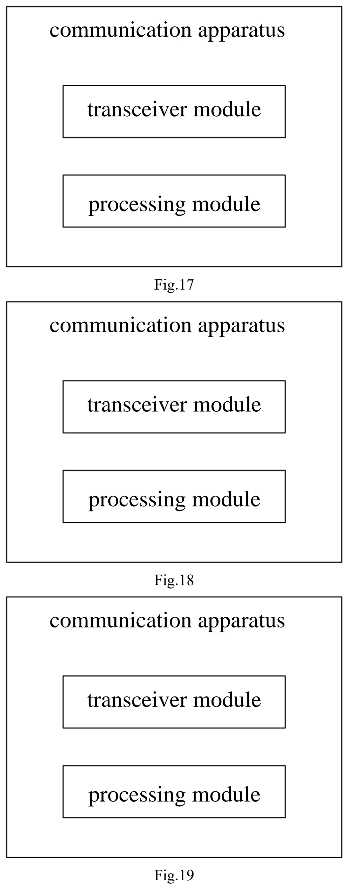

FIG. 17 is a schematic structural diagram of a communication apparatus provided by an embodiment of the present invention. As shown in FIG. 17, the apparatus may include:
a transceiver module, configured to receive a PIN parameter corresponding to the PIN, where the PIN parameter includes an effective duration and/or an ineffective duration of the PIN.
a processing module, configured to manage the PIN based on the effective duration and/or ineffective duration of the PIN.

In summary, in the communication apparatus provided by the embodiments of the present invention, the network element in the 5GC directly manages the PIN, rather than the PEGC in the PIN managing the PIN, thereby avoiding the phenomenon where "the PEGC in the PIN dishonestly manages the PIN, or the PEGC in the PIN cannot communicate with the 5GC in time to manage the situation due to signal coverage issues," achieving accurate management of the PIN. Moreover, the method of the present invention does not require the introduction of new entities, thereby saving resources, reducing system complexity, and improving management efficiency.

Optionally, in an embodiment of the present invention, the processing module is further configured to:
release a PIN resource corresponding to the PIN if a current time is not within the effective duration of the PIN and/or if the current time is within the ineffective duration of the PIN.

Optionally, in an embodiment of the present invention, the processing module is further configured to:
deactivate the PIN if a current time is not within the effective duration of the PIN and/or if the current time is within the ineffective duration of the PIN.
activate the PIN if the current time is within the effective duration of the PIN.

Optionally, in an embodiment of the present invention, the processing module is further configured to:
release context information of the PIN locally stored in the first network element.

Optionally, in an embodiment of the present invention, the processing module is further configured to:
not process a service corresponding to the PIN.

The processing module is further configured to:
process the service corresponding to the PIN.

Optionally, in an embodiment of the present invention, the apparatus is further configured to perform at least one of:
sending a first management request to a second network element, where the first management request is used to request the second network element to release the PIN resource corresponding to the PIN or deactivate the PIN.
sending a first notification message to an AF, where the first notification message is used to notify the AF that the PIN resource corresponding to the PIN has been released or that the PIN has been deactivated.

Optionally, in an embodiment of the present invention, the apparatus is further configured to perform at least one of:
sending a first activation request to a second network element, where the first activation request is used to request activation of the PIN.
sending a second notification message to the AF, where the second notification message is used to notify the AF that the PIN has been activated.

Optionally, in an embodiment of the present invention, the second network element includes at least one of:
AMF network element.
SMF network element.

Optionally, in an embodiment of the present invention, when the second network element is the AMF network element, the first management request or the first activation request includes an identifier of a first terminal and/or an identifier of a second terminal, where the first terminal is a PEGC in the PIN, and the second terminal is a PEMC in the PIN.

Optionally, in an embodiment of the present invention, the transceiver module is further configured to:
receive the PIN parameter sent by the AF.

Optionally, in an embodiment of the present invention, the PIN parameter further includes a PIN identifier ID.

Optionally, in an embodiment of the present invention, the first management request, the first notification message, the first activation request, the second notification message include a PIN ID.

Optionally, in an embodiment of the present invention, the first network element includes at least one of:
UDM function;
NEF;
PCF; or
UDR.

FIG. 18 is a schematic structural diagram of a communication apparatus provided by an embodiment of the present invention. As shown in FIG. 18, the apparatus may include:
a transceiver module, configured to receive a first management request or a first activation request, where the first management request is used to request the second network element to release a PIN resource corresponding to the PIN or deactivate the PIN, and the first activation request is used to request activation of the PIN.
a processing module, configured to manage the PIN based on the first management request or the first activation request.

In summary, in the communication apparatus provided by the embodiments of the present invention, the network element in the 5GC directly manages the PIN, rather than the PEGC in the PIN managing the PIN, thereby avoiding the phenomenon where "the PEGC in the PIN dishonestly manages the PIN, or the PEGC in the PIN cannot communicate with the 5GC in time to manage the situation due to signal coverage issues," achieving accurate management of the PIN. Moreover, the method of the present invention does not require the introduction of new entities, thereby saving resources, reducing system complexity, and improving management efficiency.

Optionally, in an embodiment of the present invention, the processing module is further configured to perform at least one of:
releasing the PIN resource corresponding to the PIN.
deactivating the PIN.

Optionally, in an embodiment of the present invention, the processing module is further configured to:
activate the PIN.

Optionally, in an embodiment of the present invention, the second network element includes at least one of:
AMF network element.
SMF network element.

Optionally, in an embodiment of the present invention, when the second network element is the AMF network element, the first management request or the first activation request includes an identifier of a first terminal and/or an identifier of a second terminal, where the first terminal is the PEGC in the PIN, and the second terminal is the PEMC in the PIN.

Optionally, in an embodiment of the present invention, when the second network element is the AMF network element, the apparatus is further configured to:
send a second management request or a second activation request to the first terminal and/or the second terminal, where the second management request is used to request the first terminal and/or the second terminal to release the PIN resource corresponding to the PIN or deactivate the PIN, and the second activation request is used to request the first terminal and/or the second terminal to activate the PIN.
receive a response message sent by the first terminal and/or the second terminal.

Optionally, in an embodiment of the present invention, when the second network element is the SMF network element, the apparatus is further configured to:
send a third management request or a third activation request to a UPF, where the third management request is used to request the UPF to release the PIN resource corresponding to the PIN or deactivate the PIN, and the third activation request is used to request the UPF to activate the PIN.

FIG. 19 is a schematic structural diagram of a communication apparatus provided by an embodiment of the present invention. As shown in FIG. 19, the apparatus may include:
a transceiver module, configured to receive a second management request or a second activation request, where the second management request is used to request the first terminal and/or the second terminal to release a PIN resource corresponding to the PIN or deactivate the PIN, and the second activation request is used to request the first terminal and/or the second terminal to activate the PIN.
a processing module, configured to manage the PIN based on the second management request or the second activation request.

In summary, in the communication apparatus provided by the embodiments of the present invention, the network element in the 5GC directly manages the PIN, rather than the PEGC in the PIN managing the PIN, thereby avoiding the phenomenon where "the PEGC in the PIN dishonestly manages the PIN, or the PEGC in the PIN cannot communicate with the 5GC in time to manage the situation due to signal coverage issues," achieving accurate management of the PIN. Moreover, the method of the present invention does not require the introduction of new entities, thereby saving resources, reducing system complexity, and improving management efficiency.

Optionally, in an embodiment of the present invention, the processing module is further configured to perform at least one of:
releasing the PIN resource corresponding to the PIN.
deactivating the PIN.

Optionally, in an embodiment of the present invention, the processing module is further configured to:
activate the PIN.

Optionally, in an embodiment of the present invention, the apparatus is further configured to:
send a response message to the AMF network element.

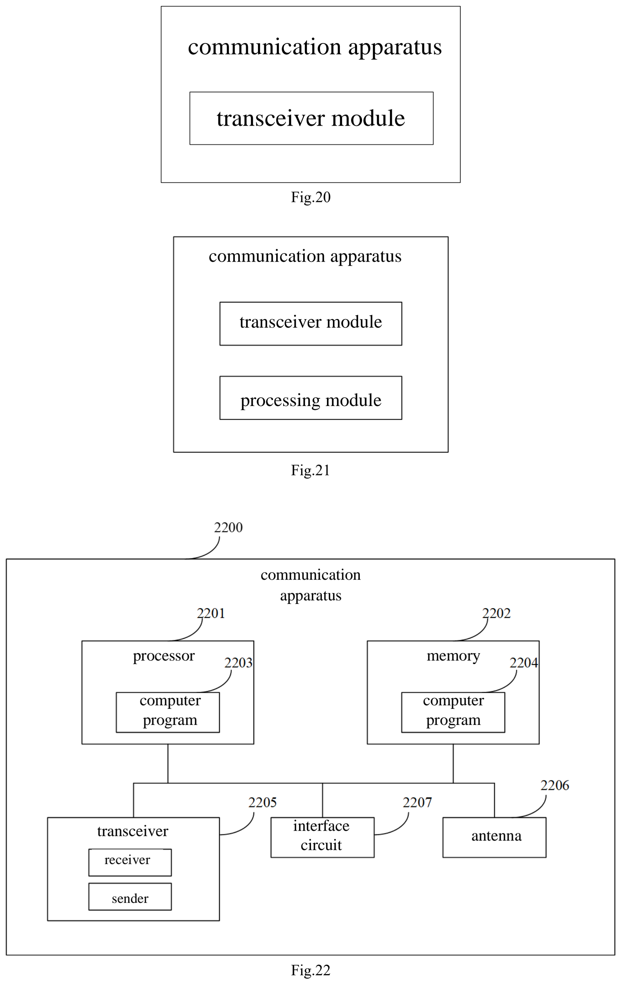

FIG. 20 is a schematic structural diagram of a communication apparatus provided by an embodiment of the present invention. As shown in FIG. 20, the apparatus may include:
a transceiver module, configured to receive a first notification message or a second notification message, where the first notification message is used to notify the AF that a PIN resource corresponding to the PIN has been released or that the PIN has been deactivated, and the second notification message is used to notify the AF that the PIN has been activated.

In summary, in the communication apparatus provided by the embodiments of the present invention, the network element in the 5GC directly manages the PIN, rather than the PEGC in the PIN managing the PIN, thereby avoiding the phenomenon where "the PEGC in the PIN dishonestly manages the PIN, or the PEGC in the PIN cannot communicate with the 5GC in time to manage the situation due to signal coverage issues," achieving accurate management of the PIN. Moreover, the method of the present invention does not require the introduction of new entities, thereby saving resources, reducing system complexity, and improving management efficiency.

FIG. 21 is a schematic structural diagram of a communication apparatus provided by an embodiment of the present invention. As shown in FIG. 21, the apparatus may include:
a transceiver module, configured to receive a third management request or a third activation request, where the third management request is used to request the UPF to release a PIN resource corresponding to the PIN or deactivate the PIN, and the third activation request is used to request the UPF to activate the PIN.
a processing module, configured to manage the PIN based on the third management request or the third activation request.

In summary, in the communication apparatus provided by the embodiments of the present invention, the network element in the 5GC directly manages the PIN, rather than the PEGC in the PIN managing the PIN, thereby avoiding the phenomenon where "the PEGC in the PIN dishonestly manages the PIN, or the PEGC in the PIN cannot communicate with the 5GC in time to manage the situation due to signal coverage issues," achieving accurate management of the PIN. Moreover, the method of the present invention does not require the introduction of new entities, thereby saving resources, reducing system complexity, and improving management efficiency.

Optionally, in an embodiment of the present invention, the processing module is further configured to perform at least one of:
releasing the PIN resource corresponding to the PIN.
deactivating the PIN.

Optionally, in an embodiment of the present invention, the processing module is further configured to:
activate the PIN.

Please refer to FIG. 22. FIG. 22 is a schematic structural diagram of a communication apparatus 2200 provided by an embodiment of the present application. The communication apparatus 2200 may be a network device, a terminal, a chip, a chip system, or a processor that supports the network device to implement the foregoing method, or a chip, a chip system, or a processor that supports the terminal to implement the foregoing method. The apparatus may be used to implement the method described in the foregoing method embodiments. For details, refer to the descriptions in the foregoing method embodiments.

The communication apparatus 2200 may include one or more processors 2201. The processor 2201 may be a general-purpose processor or a special-purpose processor. For example, it may be a baseband processor or a central processing unit. The baseband processor may be used to process communication protocols and communication data, and the central processing unit may be used to control the communication apparatus (for example, a base station, a baseband chip, a terminal, a terminal chip, a DU, or a CU), execute computer programs, and process data of the computer programs.

Optionally, the communication apparatus 2200 may further include one or more memories 2202, on which a computer program 2204 may be stored. The processor 2201 executes the computer program 2204 to enable the communication apparatus 2200 to perform the method described in the foregoing method embodiments. Optionally, data may also be stored in the memory 2202. The communication apparatus 2200 and the memory 2202 may be separately disposed, or may be integrated together.

Optionally, the communication apparatus 2200 may further include a transceiver 2205 and an antenna 2206. The transceiver 2205 may be referred to as a transceiver unit, a transceiver machine, a transceiver circuit, or the like, and is configured to implement a transceiver function. The transceiver 2205 may include a receiver and a transmitter. The receiver may be referred to as a receiver or a receiving circuit, and is configured to implement a receiving function. The transmitter may be referred to as a transmitter or a transmitting circuit, and is configured to implement a transmitting function.

Optionally, the communication apparatus 2200 may further include one or more interface circuits 2207. The interface circuit 2207 is configured to receive code instructions and transmit the code instructions to the processor 2201. The processor 2201 runs the code instructions to enable the communication apparatus 2200 to perform the method described in the foregoing method embodiments.

In an implementation, the processor 2201 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The foregoing transceiver circuit, interface, or interface circuit may be configured to read/write code/data, or the foregoing transceiver circuit, interface, or interface circuit may be configured to transmit or transfer signals.

In an implementation, the processor 2201 may store a computer program 2203. The computer program 2203 runs on the processor 2201, to enable the communication apparatus 2200 to perform the method described in the foregoing method embodiments. The computer program 2203 may be fixed in the processor 2201. In this case, the processor 2201 may be implemented by hardware.

In an implementation, the communication apparatus 2200 may include a circuit. The circuit may implement a sending, receiving, or communication function in the foregoing method embodiments. The processor and the transceiver described in the present invention may be implemented on an integrated circuit (IC), an analog IC, a radio frequency integrated circuit (RFIC), a hybrid signal IC, an application-specific integrated circuit (ASIC), a printed circuit board (PCB), an electronic device, or the like. The processor and the transceiver may also be manufactured by using various IC process technologies, for example, a complementary metal oxide semiconductor (CMOS), an N-type metal oxide semiconductor (NMOS), a P-type metal oxide semiconductor (PMOS), a bipolar junction transistor (BJT), a bipolar CMOS (BiCMOS), silicon germanium (SiGe), gallium arsenide (GaAs), or the like.

The communication apparatus in the foregoing embodiments may be a network device or a terminal. However, the scope of the communication apparatus described in the present invention is not limited thereto, and the structure of the communication apparatus may not be limited by FIG. 22. The communication apparatus may be an independent device or may be a part of a larger device. For example, the communication apparatus may be:
(1) an independent integrated circuit (IC), a chip, or a chip system or subsystem.
(2) a set including one or more ICs; optionally, the set of ICs may further include a storage component configured to store data and a computer program.
(3) an ASIC, for example, a modem (Modem).
(4) a module that can be embedded in another device.
(5) a receiver, a terminal, an intelligent terminal, a cellular phone, a wireless device, a handheld device, a mobile unit, a vehicle-mounted device, a network device, a cloud device, an artificial intelligence device, or the like.
(6) another device, or the like.

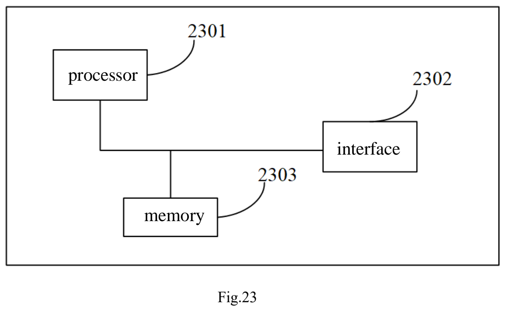

For a case in which the communication apparatus may be a chip or a chip system, refer to a schematic diagram of a structure of the chip shown in FIG. 23. The chip shown in FIG. 23 includes a processor 2301 and an interface 2302. There may be one or more processors 2301, and there may be a plurality of interfaces 2302.

Optionally, the chip further includes a memory 2303. The memory 2303 is configured to store a necessary computer program and data.

A person skilled in the art may further understand that various illustrative logical blocks (illustrative logical block) and steps (step) described with reference with the embodiments disclosed in the present invention may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of the present invention.

This application further provides a computer-readable storage medium. The computer-readable storage medium stores instructions. When the instructions are executed, the method in any one of the foregoing method embodiments is implemented.

This application further provides a computer program product. When the computer program product is executed by a computer, the method in any one of the foregoing method embodiments is implemented.

In the foregoing embodiments, the methods may be implemented in whole or in part by software, hardware, firmware, or any combination thereof. When software is used for implementation, the methods may be implemented in whole or in part in a form of a computer program product. The computer program product includes one or more computer programs. When the computer programs are loaded and executed on a computer, the procedures or functions according to the embodiments of the present invention are all or partially generated. The computer may be a general-purpose computer, a dedicated computer, a computer network, or another programmable apparatus. The computer programs may be stored in a computer-readable storage medium, or may be transmitted from a computer-readable storage medium to another computer-readable storage medium. For example, the computer programs may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (DVD)), or a semiconductor medium (for example, a solid-state disk (SSD)).

A person of ordinary skill in the art may understand that first, second, and various numerical numbers involved in the present invention are merely for distinguishing for ease of description, and are not used to limit the scope of the embodiments of the present invention or represent a sequence.

In the present invention, "at least one" may also be described as "one or more", and "a plurality of' may be two, three, four, or more. This is not limited in the present invention. In the embodiments of the present invention, for a technical feature, expressions such as "first", "second", "third", "A", "B", "C", and "D" are used to distinguish between technical features described by the technical feature. There is no chronological order or size order between the technical features described by the expressions such as "first", "second", "third", "A", "B", "C", and "D".

The correspondence shown in each table in the present invention may be configured or predefined. The values of the information in each table are merely examples, and other values may be configured. This is not limited in the present invention. When the correspondence between the configuration information and each parameter is configured, not all the correspondences shown in each table need to be configured. For example, in the tables in the present invention, some rows of correspondences shown may not be configured. For another example, appropriate adjustment may be made based on the foregoing tables, for example, division, combination, or the like. The names of parameters shown in the titles of the foregoing tables may also be other names that can be understood by a communications apparatus, and values or representation forms of the parameters may also be other values or representation forms that can be understood by the communications apparatus. When the foregoing tables are implemented, another data structure may be used, for example, an array, a queue, a container, a stack, a linear table, a pointer, a linked list, a tree, a graph, a structure, a class, a heap, a hash table, or the like.

In the present invention, "predefined" may be understood as "defined", "predefined", "stored", "pre-stored", "pre-negotiated", "pre-configured", "solidified", or "pre-burned".

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

A person skilled in the art may clearly understand that, for the purpose of convenient and brief description, for a detailed working process of the foregoing system, apparatus, and unit, refer to a corresponding process in the foregoing method embodiments. Details are not described herein again.

The foregoing descriptions are merely specific implementations of the present invention, but are not intended to limit the scope of the present invention. Any variation or replacement readily figured out by a person skilled in the art within the technical scope disclosed in the present invention shall fall within the scope of the present invention. Therefore, the scope of the present invention shall be subject to the scope of the claims.

## Claims

1. A method for managing personal Internet of Things network (PIN), performed by a first network element, comprising:
receiving a PIN parameter corresponding to a PIN, wherein the PIN parameter comprises an effective duration and/or an ineffective duration of the PIN; and
managing the PIN based on the effective duration and/or ineffective duration of the PIN.

2. The method according to claim 1, wherein managing the PIN based on the effective duration and/or ineffective duration of the PIN comprises:
releasing a PIN resource corresponding to the PIN in a case where a current time is not within the effective duration of the PIN and/or in a case where the current time is within the ineffective duration of the PIN.

3. The method according to claim 1, wherein managing the PIN based on the effective duration and/or ineffective duration of the PIN comprises:
deactivating the PIN in a case where a current time is not within the effective duration of the PIN and/or in a case where the current time is within the ineffective duration of the PIN; and
activating the PIN in a case where the current time is within the effective duration of the PIN.

4. The method according to claim 2, wherein releasing the PIN resource corresponding to the PIN comprises:
releasing context information of the PIN locally stored in the first network element.

5. The method according to claim 3, wherein deactivating the PIN comprises:
not processing a service corresponding to the PIN; and
wherein activating the PIN comprises:
processing the service corresponding to the PIN.

6. The method according to claim 2 or 3, further comprising at least one of:
sending a first management request to a second network element, wherein the first management request is used to request the second network element to release the PIN resource corresponding to the PIN or deactivate the PIN; or
sending a first notification message to an application function (AF), wherein the first notification message is used to notify the AF that the PIN resource corresponding to the PIN is released or that the PIN is deactivated.

7. The method according to claim 3, further comprising at least one of:
sending a first activation request to a second network element, wherein the first activation request is used to request an activation of the PIN; or
sending a second notification message to the AF, wherein the second notification message is used to notify the AF that the PIN is activated.

8. The method according to claim 6 or 7, wherein the second network element comprises at least one of:
an access and mobility management function (AMF) network element; or
a session management function (SMF) network element.

9. The method according to claim 8, wherein in a case where the second network element is the AMF network element, the first management request or the first activation request comprises an identifier of a first terminal and/or an identifier of a second terminal,
wherein the first terminal is a PIN element with gateway capability (PEGC) in the PIN, and the second terminal is a PIN element with management capability (PEMC) in the PIN.

10. The method according to claim 1, wherein receiving the PIN parameter corresponding to the PIN comprises:
receiving the PIN parameter sent by an AF.

11. The method according to claim 6 or 7, wherein the PIN parameter further comprises a PIN identifier (ID).

12. The method according to claim 11, wherein the first management request, the first notification message, the first activation request, the second notification message comprise the PIN ID.

13. The method according to claim 11, wherein the first network element comprises at least one of:
a unified data management (UDM) function;
a network exposure function (NEF);
a policy control function (PCF); or
a unified data repository (UDR).

14. A method for managing personal Internet of Things network (PIN), performed by a second network element, comprising:
receiving a first management request or a first activation request, wherein the first management request is used to request the second network element to release a PIN resource corresponding to a PIN or deactivate the PIN, and the first activation request is used to request an activation of the PIN; and
managing the PIN based on the first management request or the first activation request.

15. The method according to claim 14, wherein managing the PIN based on the first management request comprises at least one of:
releasing the PIN resource corresponding to the PIN; or
deactivating the PIN.

16. The method according to claim 14, wherein managing the PIN based on the first activation request comprises:
activating the PIN.

17. The method according to claim 14, wherein the second network element comprises at least one of:
an access and mobility management function (AMF) network element; or
a session management function (SMF) network element.

18. The method according to claim 17, wherein in a case where the second network element is the AMF network element, the first management request or the first activation request comprises an identifier of a first terminal and/or an identifier of a second terminal,
wherein the first terminal is a PIN element with gateway capability (PEGC) in the PIN, and the second terminal is a PIN element with management capability (PEMC) in the PIN.

19. The method according to claim 17, wherein in a case where the second network element is the AMF network element, the method further comprises:
sending a second management request or a second activation request to the first terminal and/or the second terminal, wherein the second management request is used to request the first terminal and/or the second terminal to release the PIN resource corresponding to the PIN or deactivate the PIN, and the second activation request is used to request the first terminal and/or the second terminal to activate the PIN; and
receiving a response message sent by the first terminal and/or the second terminal.

20. The method according to claim 17, wherein in a case where the second network element is the SMF network element, the method further comprises:
sending a third management request or a third activation request to a user plane function (UPF), wherein the third management request is used to request the UPF to release the PIN resource corresponding to the PIN or deactivate the PIN, and the third activation request is used to request the UPF to activate the PIN.

21. A method for managing personal Internet of Things network (PIN), performed by a first terminal and/or a second terminal, comprising:
receiving a second management request or a second activation request, wherein the second management request is used to request the first terminal and/or the second terminal to release a PIN resource corresponding to a PIN or deactivate the PIN, and the second activation request is used to request the first terminal and/or the second terminal to activate the PIN; and
managing the PIN based on the second management request or the second activation request.

22. The method according to claim 21, wherein managing the PIN based on the second management request comprises at least one of:
releasing the PIN resource corresponding to the PIN; or
deactivating the PIN.

23. The method according to claim 21, wherein managing the PIN based on the second activation request comprises:
activating the PIN.

24. The method according to claim 21, further comprising:
sending a response message to an access and mobility management function (AMF)network element.

25. A method for managing personal Internet of Things network (PIN), performed by an application function (AF), comprising:
receiving a first notification message or a second notification message, wherein the first notification message is used to notify the AF that a PIN resource corresponding to a PIN is released or that the PIN is deactivated, and the second notification message is used to notify the AF that the PIN is activated.

26. A method for managing personal Internet of Things network (PIN), performed by a user plane function (UPF), comprising:
receiving a third management request or a third activation request, wherein the third management request is used to request the UPF to release a PIN resource corresponding to a PIN or deactivate the PIN, and the third activation request is used to request the UPF to activate the PIN; and
managing the PIN based on the third management request or the third activation request.

27. The method according to claim 26, wherein managing the PIN based on the third management request comprises at least one of:
releasing the PIN resource corresponding to the PIN; or
deactivating the PIN.

28. The method according to claim 26, wherein managing the PIN based on the third activation request comprises:
activating the PIN.

29. A method for managing personal Internet of Things network (PIN), performed by a core network device, wherein the core network device comprises a first network element, a second network element and a user plane function (UPF), and the method comprises:
receiving, by the first network element, a PIN parameter corresponding to a PIN, wherein the PIN parameter comprises an effective duration and/or an ineffective duration of the PIN;
managing, by the first network element, the PIN based on the effective duration and/or ineffective duration of the PIN;
sending, by the first network element, a first management request or a first activation request to the second network element, wherein the first management request is used to request the second network element to release a PIN resource corresponding to the PIN or deactivate the PIN, and the first activation request is used to request an activation of the PIN;
receiving, by the second network element, the first management request or the first activation request, and managing the PIN based on the first management request or the first activation request;
sending, by the second network element, a third management request or a third activation request to the UPF, wherein the third management request is used to request the UPF to release the PIN resource corresponding to the PIN or deactivate the PIN, and the third activation request is used to request the UPF to activate the PIN; and
receiving, by the UPF, the third management request or the third activation request, and managing the PIN based on the third management request or the third activation request.

30. A communication apparatus, comprising:
a transceiver module configured to receive a personal Internet of Things network (PIN) parameter corresponding to a PIN, wherein the PIN parameter comprises an effective duration and/or an ineffective duration of the PIN; and
a processing module configured to manage the PIN based on the effective duration and/or ineffective duration of the PIN.

31. A communication apparatus, comprising:
a transceiver module configured to receive a first management request or a first activation request, wherein the first management request is used to request a second network element to release a personal Internet of Things network (PIN) resource corresponding to a PIN or deactivate the PIN, and the first activation request is used to request an activation of the PIN; and
a processing module configured to manage the PIN based on the first management request or first activation request.

32. A communication apparatus, comprising:
a transceiver module configured to receive a second management request or a second activation request, wherein the second management request is used to request a first terminal and/or a second terminal to release a personal Internet of Things network (PIN) resource corresponding to a PIN or deactivate the PIN, and the second activation request is used to request the first terminal and/or the second terminal to activate the PIN; and
a processing module configured to manage the PIN based on the second management request or second activation request.

33. A communication apparatus, comprising:
a transceiver module configured to receive a first notification message or a second notification message, wherein the first notification message is used to notify an application function (AF) that a personal Internet of Things network (PIN) resource corresponding to a PIN is released or that the PIN is deactivated, and the second notification message is used to notify the AF that the PIN is activated.

34. A communication apparatus, comprising:
a transceiver module configured to receive a third management request or a third activation request, wherein the third management request is used to request a user plane function (UPF) to release a personal Internet of Things network (PIN) resource corresponding to a PIN or deactivate the PIN, and the third activation request is used to request the UPF to activate the PIN; and
a processing module configured to manage the PIN based on the third management request or third activation request.

35. A communication apparatus, comprising a processor and a memory, wherein the memory stores a computer program, and the processor executes the computer program stored in the memory to cause the apparatus to perform the method according to any one of claims 1 to 13, or the processor executes the computer program stored in the memory to cause the apparatus to perform the method according to any one of claims 14 to 20, or the processor executes the computer program stored in the memory to cause the apparatus to perform the method according to any one of claims 21 to 24, or the processor executes the computer program stored in the memory to cause the apparatus to perform the method according to claim 25, or the processor executes the computer program stored in the memory to cause the apparatus to perform the method according to any one of claims 26 to 28.

36. A communication apparatus, comprising: a processor and an interface circuit, wherein
the interface circuit is configured to receive code instructions and transmit the code instructions to the processor; and
the processor is configured to run the code instructions to perform the method according to any one of claims 1 to 13, or to run the code instructions to perform the method according to any one of claims 14 to 20, or to run the code instructions to perform the method according to any one of claims 21 to 24, or to run the code instructions to perform the method according to claim 25, or to run the code instructions to perform the method according to any one of claims 26 to 28.

37. A computer-readable storage medium having stored therein instructions that, when executed, cause the method according to any one of claims 1 to 13 to be implemented, or cause the method according to any one of claims 14 to 20 to be implemented, or cause the method according to any one of claims 21 to 24 to be implemented, or cause the method according to claim 25 to be implemented, or cause the method according to any one of claims 26 to 28 to be implemented.
